(19)

**Europäisches Patentamt**
**European Patent Office**
**Office européen des brevets**

(11)  **EP 3 267 107 B1**

(12) **EUROPEAN PATENT SPECIFICATION**

(45) Date of publication and mention
of the grant of the patent:
**17.03.2021 Bulletin 2021/11**

(51) Int Cl.:
*F23N 1/00* *(2006.01)*  *F23N 5/02* *(2006.01)*
*F23R 3/34* *(2006.01)*

(21) Application number: **16178756.9**

(22) Date of filing: **08.07.2016**

(54) **METHOD OF CONTROLLING A GAS TURBINE ASSEMBLY**

VERFAHREN ZUR STEUERUNG EINER GASTURBINENANLAGE

PROCÉDÉ DE COMMANDE D'UN ENSEMBLE DE TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.01.2018 Bulletin 2018/02**

(73) Proprietor: **Ansaldo Energia IP UK Limited
London W1G 9DQ (GB)**

(72) Inventors:
• **BOLAÑOS-CHAVERRI, Felipe
5400 BADEN (CH)**

• **MEEUWISSEN, Thiemo
5408 ENNETBADEN (CH)**
• **MARCHIONE, Teresa
5408 ENNETBADEN (CH)**

(74) Representative: **Bernotti, Andrea et al
Studio Torta S.p.A.
Via Viotti, 9
10121 Torino (IT)**

(56) References cited:
**EP-A1- 2 287 456      EP-A1- 2 290 206
EP-A1- 2 581 583      EP-A2- 0 694 740
US-A1- 2005 188 702   US-A1- 2012 073 305**

**Description**

TECHNICAL FIELD

The present invention relates to a method of controlling a gas turbine assembly.
More specifically, the present invention relates to a method of controlling a gas turbine assembly with sequential combustion during start up and similar transient phases. Use to which the following description will make explicit reference purely by way of example without implying any loss of generality.

BACKGROUND

As is known, gas turbine assemblies with sequential combustion are generally provided with two combustors and with a high-pressure intermediate turbine which is interposed between the two combustors for subjecting the flow of hot gasses moving from first to second combustor to a partial expansion that reduces the temperature of the hot gasses.
Selective use of the second combustor enables to modulate power output, allowing the gas turbine assembly to efficiently operate in a wide range of load conditions with relatively low pollutant emissions. EP 0 694 740 A2 and US2005/188702 disclose methods of controlling a gas turbine assembly during stable full-load or partial-load operating conditions wherein the fuel flow-rate supplied to the first combustor is controlled on the basis of the flame temperature inside said first combustor.
On the other hand, in today's gas turbine assemblies with sequential combustion, the combustor start-up sequence is usually controlled according to a mapping table based on the gas temperature at the outlet of the intermediate turbine, hereinafter referred to as TAT1, and on the ratio between the fuel mass flow-rate supplied to the pilot flame of the first combustor and the total fuel mass flow-rate supplied to the first combustion chamber on the measured temperature TAT1, hereinafter referred to as S1R, which is function of the thermal state of the compressor of gas turbine assembly.
In other words, during start-up phase, fuel is timely supplied to first and/or second combustor according to a predefined schedule based on a fixed TAT1 value.
The TAT1 schedule is usually defined during on-field tests and often needs to be adjusted on site in order to match the real operating conditions of the gas turbine assembly and to improve the startup behavior of combustors.
Since start-up is a transient phase, tune up of the TAT1 schedule is very difficult because engine parameters (i.e. air and fuel mass flow-rates, pressures, temperatures, turbine rotational speed, etc.) are used to change continuously. Also the thermal state of the engine plays an important role (warm or cold engine) and it adds a further variable to the tune-up procedure.
Unfortunately, currently-used fixed-TAT1 schedules based on TAT1 nonstop measurement does not take into consideration ambient temperature changes and thermal state of the engine.
In other words, currently-used TAT1 schedules does not provide the required flexibility and accuracy to optimize the start-up phase of the gas turbine assembly in all engine operating conditions.
TAT1 parameter in fact is measured faraway downstream of the first combustor and thus it may not reveal sudden variations of the flame temperature inside the combustor, and these sudden changes in flame temperature inside the combustor can lead to flame instabilities, lean blowout phenomena (generally known as LBO) and/or pressure pulsations, with all problems that this entails.

SUMMARY OF THE INVENTION

Aim of the present invention is to avoid the drawbacks connected to currently-used fixed-TAT1 schedules.
In compliance with these aims, according to the present invention there is provided a method for controlling a gas turbine assembly comprising: a compressor in which compression of the outside air occurs for producing a flow of compressed air; a sequential combustor including a first combustor in which combustion of a mixture of fuel and compressed air arriving from said compressor occurs for producing a flow of hot gasses and a second combustor (7) which is located downstream of said first combustor (4) and in which combustion of a mixture of fuel and hot gasses arriving from said first combustor (4) occurs; the method being characterized by comprising, on a start-up transient operating phase of the gas turbine assembly, the step of controlling the fuel mass flow-rate supplied to said first combustor on the basis of the flame temperature inside said first combustor.
Preferably said method is furthermore characterized in that the fuel mass flow-rate supplied to said first combustor is controlled according to a predetermined TFL1 schedule.
Preferably said method is furthermore characterized in that said TFL1 schedule is adapted to maintain the flame temperature inside the first combustor substantially constant during the start-up transient operating phase.
Preferably said method is furthermore characterized in that said TFL1 schedule is determined on the basis of the values of a plurality of engine parameters of said gas turbine assembly.

Preferably said method is furthermore characterized in that said gas turbine assembly additionally comprises an intermediate turbine which is interposed between said first and said second combustor, and in which a partial expansion of the hot gasses arriving from said first combustor and directed to said second combustor occurs.

Preferably said method is furthermore characterized by comprising the steps of: measuring said plurality of engine parameters of the gas turbine assembly; selecting/ determining the appropriate TFL1 schedule on the basis of the current values of said plurality of engine parameters; and controlling the fuel mass flow-rate supplied to said first and/or to said second combustor on the basis of the said TFL1 schedule.

Preferably said method is furthermore characterized in that said TFL1 schedule includes a sequence of target values for the gas temperature measured at the outlet of the intermediate turbine; said target values being calculated on the basis of the current values of said engine parameters of said gas turbine assembly, and according to a mathematical model describing the relations between the flame temperature inside the first combustor and said engine parameters.

Preferably said method is furthermore characterized by comprising the steps of repetitively measuring the gas temperature at the outlet of said intermediate turbine; and the step of controlling the fuel mass flow-rate supplied to said first and/or said second combustor so that the gas temperature measured at the outlet of the intermediate turbine matches said sequence of target values.

Preferably said method is furthermore characterized in that said plurality of engine parameters includes the gas temperature at the inlet of said compressor, and/or the gas temperature at the outlet of said compressor, and/or the gas temperature at the outlet of said intermediate turbine, and/or the gas pressure at the outlet of said compressor, and/or the gas pressure inside said first combustor, and/or the gas pressure inside of said second combustor, and/or the rotational speed of the engine shaft of gas turbine assembly.

BRIEF DESCRIPTION OF THE DRAWINGS

The present invention will now be described with reference to the accompanying drawings, which show a non-limitative embodiment thereof, in which:

- Figure 1 is a schematic view of a gas turbine assembly according to one embodiment of the present invention;
- Figure 2 is a partially sectioned, perspective view of the gas turbine assembly in Figure 1;
- Figure 3 is a graph showing the flame temperature (TFL) inside the first combustor of the gas turbine assembly versus rotational speed of the gas turbine assembly, during a start-up phase performed according to a conventional fixed-TAT1 schedule and with the gas turbine assembly in two different engine thermal states; whereas

- Figure 4 is a graph showing the flame temperature (TFL) inside the first combustor of the gas turbine assembly versus rotational speed of the gas turbine assembly, during a start-up phase performed according to the present invention and with the gas turbine assembly in the same two different engine thermal states shown in Figure 2; whereas
- Figure 5 is a sectioned view of a portion of a gas turbine assembly operating according to an alternative embodiment of the present invention.

DETAILED DESCRIPTION OF EXEMPLARY EMBODIMENTS

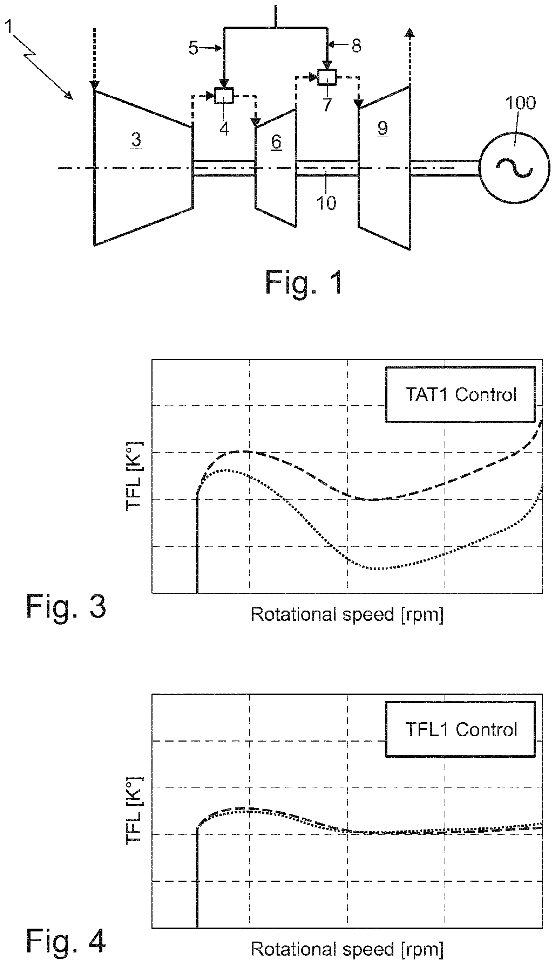

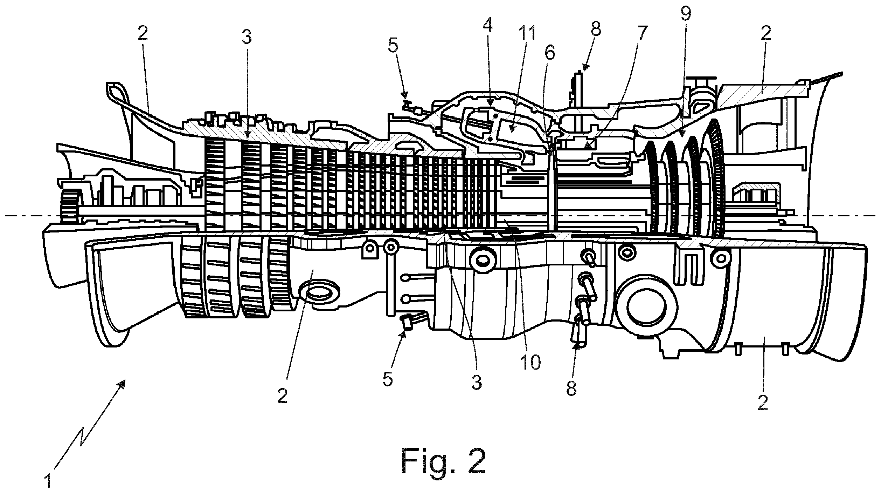

With reference to Figures 1 and 2, referral number 1 indicates as a whole a gas turbine assembly with sequential combustion which is preferably particularly adapted to drive into rotation a traditional electric generator 100.

The gas turbine assembly 1 basically comprises, in succession along a main tubular casing 2: a preferably multi-stage, compressor 3 in which compression of the outside air occurs for producing a flow of compressed air; a first combustor 4 which is located downstream of compressor 3 and in which combustion of a mixture of the compressed air arriving from compressor 3 and fuel arriving from a first fuel supply line 5 occurs for producing a flow of hot gasses; a high-pressure turbine 6 which is located downstream of combustor 4 and in which a partial expansion of the hot gasses arriving from combustor 4 occurs; a second combustor 7 which is located downstream of turbine 6 and in which combustion of a mixture of the hot gasses arriving from turbine 6 and fuel arriving from a second fuel supply line 8 occurs for producing a second flow of hot gasses; and finally a preferably multi-stage, low-pressure turbine 9 which is located downstream of combustor 7 and in which a complete expansion of the hot gasses arriving from combustor 7 occurs before said hot gasses leave the gas turbine assembly 1.

The first combustor 4 and the second combustor 7 define a sequential combustor. Preferably each combustor 4, 7 of gas turbine assembly 1 moreover comprises a combustion chamber and a fuel burner located at inlet of said combustion chamber.

In the example shown, combustors 4 and 7 of gas turbine assembly 1 are can-type combustors. However in a different embodiment combustors 5 and/or 7 could be cannular-type combustors or annular-type combustors.

Overall structure of gas turbine assembly 1 is widely known per se, thus no further explanations are required.

General operation of gas turbine assembly 1 is similar to that of any other gas turbine assembly with sequential combustion.

During stable full- or partial-load operations, fuel is conveniently supplied in known manner to combustor/s 4 and/or 7 so that current power output continuously matches the electric-generator power demand.

Instead, on start-up of gas turbine assembly 1, rather than controlling the fuel flow-rate in fuel supply line/s 5 and/or 8 according to a predetermined fixed-TAT1 schedule (i.e. on a predetermined schedule based on a given constant value of the gas temperature at the outlet of turbine 6), the fuel flow-rate in fuel supply line/s 5 and/or 8 is timely controlled according to the flame temperature inside the combustion chamber 11 of combustor 4, hereinafter referred to as TFL1.

More in detail, the fuel flow-rate in fuel supply line/s 5 and/or 8 is preferably controlled according to a predetermined TFL1 schedule which is preferably selected so as to maintain the TFL1 value (i.e. the flame temperature inside the combustion chamber 11 of combustor 4) substantially constant during start-up phase.

However, since direct measurement of TFL1 (i.e. the flame temperature inside the combustion chamber 11 of combustor 4) is normally not available, an estimate of TFL1 parameter is calculated on the basis of real-time measurement of several engine parameters of gas turbine assembly 1.

Preferably these engine parameters are: the gas temperature at inlet of compressor 3, hereinafter referred to as Tk1; the gas temperature at outlet of compressor 3, hereinafter referred to as Tk2; the gas temperature at the outlet of turbine 6 or TAT1; the gas pressure at outlet of compressor 3, hereinafter referred to as Pk2; the gas pressure inside combustor 4, hereinafter referred to as PEV; the gas pressure inside of combustor 7, hereinafter referred to as PSEV; and the rotational speed of the engine shaft 10 of gas turbine assembly 1.

Therefore, the aforesaid TFL1 schedule is preferably selected/determined on the basis of the current values of a plurality of measured engine parameters (Tkl, Tk2, TAT1, Pk2, PEV, PSEV, etc.).

Preferably, the TFL1 schedule moreover includes a sequence of target values for the gas temperature at the outlet of turbine 6, hereinafter referred to as $TAT1_{cmd}$, that are calculated on the basis of the current values of said plurality of engine parameters (Tk1, Tk2, TAT1, Pk2, PEV, PSEV, etc.), and according to a mathematical model describing the relations between TFL1 (i.e. the flame temperature inside the combustion chamber 11 of combustor 4) and said engine parameters.

More in detail, during start-up of gas turbine assembly 1, the fuel flow-rate in fuel supply line/s 5 and/or 8 is preferably timely controlled so that the measured TAT1 parameter (i.e. the gas temperature measured at the outlet of turbine 6) matches a sequence of target values $TAT1_{cmd}$ resulting from the following equations:

$$(1) \quad TAT1_{cmd} = [\alpha_{TFL} \cdot TFL1_{schedule}(n^*) + (1 - \alpha_{TFL}) \cdot Tk2] \cdot HPT\_PR^{n_{PR}(n^*)}$$

$$(2) \quad \alpha_{TFL} = \frac{TAT1}{TFL1}$$

$$(3) \quad HPT\_PR = \frac{P_{SEV}}{P_{EV}}$$

$$(4) \quad n^* = \frac{n_{mech}}{n_{nominal}} \sqrt{\frac{288.15}{Tk1,avg}}$$

where $n_{nominal}$ is the nominal polytropic index; $n_{mech}$ is the real polytropic index; $n_{PR}(n^*)$ is the turbine expansion exponent which depends on turbine mechanical characteristics and on $n^*$; $TFL1_{schedule}(n^*)$ is a predetermined set-point line function of $n^*$; and finally Tk1, avg is the average value of Tk1 (i.e. the average value of the gas temperature at inlet of compressor 3).

For what above, the method of controlling the gas turbine assembly 1 during start-up preferably basically comprises the step of controlling the fuel mass flow-rate supplied to combustor 4 and/or combustor 7 on the basis of a predetermined TFL1 schedule, which is preferably adapted to maintain the flame temperature inside the combustor chamber 11 of combustor 4, i.e. the TFL1 parameter, substantially constant during start-up.

More in detail, the method of controlling the gas turbine assembly 1 preferably includes the steps of:

- measuring a plurality of engine parameters (Tkl, Tk2, TAT1, Pk2, PEV, PSEV, etc.) of gas turbine assembly 1;

- selecting/determining the appropriate TFL1 schedule on the basis of the current values of said plurality of engine parameters (Tkl, Tk2, TAT1, Pk2, PEV, PSEV, etc.); and
- controlling the fuel mass flow-rate supplied to combustor 4 and/or to combustor 7 according to said TFL1 schedule.

Moreover said TFL1 schedule preferably includes a sequence of TAT1cmd values (i.e. a sequence of target values for the gas temperature measured at the outlet of turbine 6), and the method of controlling the gas turbine assembly 1 includes the steps of:

- repetitively measuring the TAT1 values (i.e. the gas temperature at the outlet of turbine 6); and
- controlling the fuel mass flow-rate supplied to combustor 4 and/or combustor 7 so that the current TAT1 values timely matches said sequence of TAT1cmd values.

The advantages resulting from the aforesaid method of controlling the gas turbine assembly 1 are large in number.

Firstly, this method minimizes the flame instabilities inside the combustion chamber 11 of combustor 4 during start-up of gas turbine assembly 1, thus significantly reducing lean blowout phenomena and/or pressure pulsations.

Moreover, with reference to Figures 2 and 3, the TFL1 schedule takes into consideration the current thermal state of the engine, thus optimizing the start-up phase of the gas turbine assembly 1 in all engine operating conditions.

Last, but not least, the aforesaid method allows to significantly reduce pollutant emissions during start-up phase of gas turbine assembly 1.

Clearly, changes may be made to the gas turbine assembly 1 and/or to the method of controlling the gas turbine assembly 1 without, however, departing from the scope of the present invention.

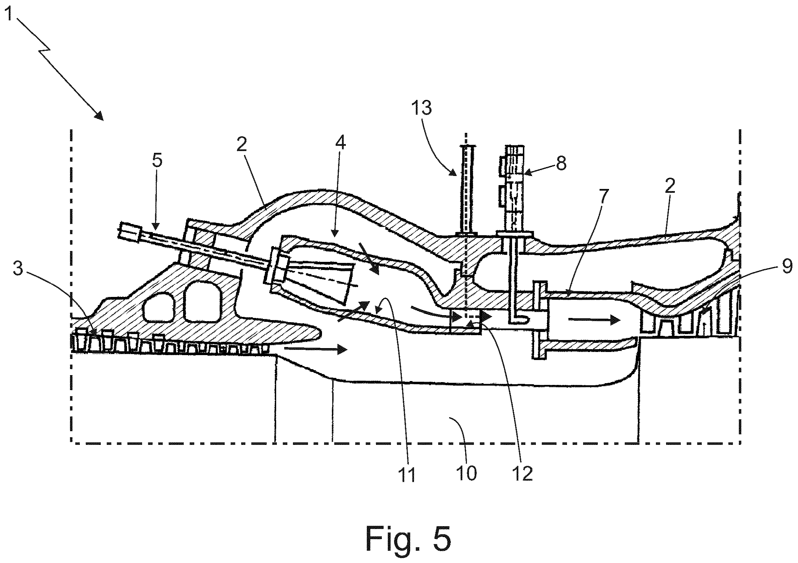

For example, according to the alternative embodiment shown in Figure 5, the gas turbine assembly 1 lacks the high-pressure turbine 6, and the flow of hot gasses coming out from combustor 4 flows through an intermediate hot-gas channel 12 directly into combustor 7.

Preferably dilution air is moreover injected into the hot-gas channel 12 by means of an air supply line 13.

Also in this embodiment, the fuel flow-rate in fuel supply line/s 5 and/or 8 is timely controlled according to the flame temperature inside the combustion chamber 11 of combustor 4 or TFL1.

More in detail, the fuel flow-rate in fuel supply line/s 5 and/or 8 is preferably controlled according to a predetermined TFL1 schedule which is preferably selected so as to maintain the TFL1 value (i.e. the flame temperature inside the combustion chamber 11 of combustor 4) substantially constant during start-up phase.

Also in this embodiment, since direct measurement of TFL1 (i.e. the flame temperature inside the combustion chamber 11 of combustor 4) is actually impossible, an estimate of TFL1 parameter is calculated on the basis of real-time measurement of several engine parameters of gas turbine assembly 1.

Preferably these engine parameters are: the gas temperature at inlet of compressor 3, hereinafter referred to as Tk1; the gas temperature at outlet of compressor 3 and at inlet of combustor 4, hereinafter referred to as Tk2 or TEV1; the gas temperature at inlet of combustor 7, hereinafter referred to as TSEV1; the gas pressure at outlet of compressor 3 or Pk2 (also corresponding to the gas pressure at inlet of combustor 4); the gas pressure inside combustor 4 or PEV; the gas pressure inside of combustor 7 or PSEV; and the rotational speed of the engine shaft 10 of gas turbine assembly 1.

Also in this case, therefore, the TFL1 schedule is preferably selected/determined on the basis of the current values of a plurality of measured engine parameters (Tkl, Tk2, TSEV1, Pk2, PEV, PSEV, etc.).

Preferably, the TFL1 schedule moreover includes a sequence of target values for the gas temperature at inlet of combustor 7, i.e. along hot-gas channel 12, that are calculated on the basis of the current values of said plurality of engine parameters (Tk1, Tk2, TSEV1, Pk2, PEV, PSEV, etc.), and according to a mathematical model describing the relations between TFL1 (i.e. the flame temperature inside the combustion chamber 11 of combustor 4) and said engine parameters.

According to a second non-shown alternative embodiment, the gas turbine assembly 1 may have more than two combustors.

In other words, the gas turbine assembly 1 may optionally comprise also a third combustor which is located downstream of turbine 9 and in which combustion of a mixture of the hot gasses arriving from turbine 9 and fuel arriving from a third fuel supply line occurs for producing a further flow of hot gasses; and a preferably multi-stage, second low-pressure turbine which is located downstream of the third combustor and in which a complete expansion of the hot gasses arriving from third combustor occurs before said hot gasses leave the gas turbine assembly 1.

Finally according to a non-shown less sophisticated embodiment, the gas turbine assembly 1 lacks both the high-pressure turbine 6 and the second combustor 7.

In this embodiment, rather than controlling the fuel flow-rate in fuel supply line/s 5 and/or 8 according to a predetermined fixed-TEV2 schedule (i.e. on a predetermined schedule based on a given constant value of the gas temperature at outlet of combustor 4, again the fuel flow-rate in fuel supply line 5 is timely controlled according to the flame temperature inside the combustion chamber 11 of combustor 4 or TFL1.

More in detail, the fuel flow-rate in fuel supply line 5 is preferably controlled according to a predetermined TFL1 schedule which is preferably selected so as to maintain the TFL1 value (i.e. the flame temperature inside the combustion chamber 11 of combustor 4) substantially constant during start-up phase.

**Claims**

1.  A method for controlling a gas turbine assembly (1) comprising: a compressor (2) in which compression of the outside air occurs for producing a flow of compressed air; a sequential combustor including a first combustor (4), in which combustion of a mixture of fuel and compressed air arriving from said compressor (2) occurs for producing a flow of hot gasses, and a second combustor (7) which is located downstream of said first combustor (4) and in which combustion of a mixture of fuel and hot gasses arriving from said first combustor (4) occurs;
    the method **being characterized by** comprising, on a start-up transient operating phase of the gas turbine assembly (1), the step of controlling the fuel mass flow-rate supplied to said first combustor (4) on the basis of and according to a predetermined TFL1 schedule of the flame temperature (TFL1) inside said first combustor (4); said TFL1 schedule being adapted to maintain the flame temperature (TFL1) inside the first combustor (4) substantially constant during the start-up transient operating phase.

2.  Method according to Claim 1, **characterized in that** said TFL1 schedule is determined on the basis of the values of a plurality of engine parameters (Tk1, Tk2, TAT1, TSEV1, Pk2, PEV, PSEV, etc.) of said gas turbine assembly (1).

3.  Method according to Claim 2, **characterized in that** said gas turbine assembly (1) additionally comprises an intermediate turbine (5) which is interposed between said first combustor (4) and said second combustor (7), and in which a partial expansion of the hot gasses arriving from said first combustor (4) and directed to said second combustor (7) occurs.

4.  Method according to Claim 2 or 3, **characterized by** comprising the steps of: measuring said plurality of engine parameters (Tk1, Tk2, TAT1, Pk2, PEV, PSEV, etc.) of the gas turbine assembly (1); selecting/ determining the appropriate TFL1 schedule on the basis of the current values of said plurality of engine parameters (Tk1, Tk2, TAT1, Pk2, PEV, PSEV, etc.); and controlling the fuel mass flow-rate supplied to said first (4) and/or to said second combustor (7) on the basis of the said TFL1 schedule.

5.  Method according to Claim 3 or 4, **characterized in that** said TFL1 schedule includes a sequence of target values (TAT1cmd) for the gas temperature measured at the outlet of the intermediate turbine (5); said target values (TAT1cmd) being calculated on the basis of the current values of said engine parameters (Tk1, Tk2, TAT1, Pk2, PEV, PSEV, etc.) of said gas turbine assembly (1), and according to a mathematical model describing the relations between the flame temperature (TFL1) inside the first combustor (4) and said engine parameters (Tk1, Tk2, TAT1, Pk2, PEV, PSEV, etc.) .

6.  Method according to Claim 5, **characterized by** comprising the steps of repetitively measuring the gas temperature (TAT1) at the outlet of said intermediate turbine (5) ; and the step of controlling the fuel mass flow-rate supplied to said first combustor (4) and/or said second combustor (7) so that the gas temperature (TAT1) measured at the outlet of the intermediate turbine (5) matches said sequence of target values (TAT1cmd).

7.  Method according to any one of Claims 3 to 6, **characterized in that** said plurality of engine parameters includes the gas temperature at the inlet of said compressor (Tk1), and/or the gas temperature at the outlet of said compressor (Tk2), and/or the gas temperature at the outlet of said intermediate turbine (TAT1), and/or the gas pressure at the outlet of said compressor (Pk2), and/or the gas pressure inside said first combustor (PEV), and/or the gas pressure inside of said second combustor (PSEV), and/or the rotational speed of the engine shaft (9) of gas turbine assembly (1).

**Patentansprüche**

1.  Verfahren zum Steuern einer Gasturbinenanordnung (1), umfassend: einen Verdichter (2), in dem eine Verdichtung der Außenluft erfolgt, um einen Strom komprimierter Luft zu erzeugen; eine sequentielle Brennkammer, die eine erste Brennkammer (4), in der eine Verbrennung eines Gemischs aus Brennstoff und komprimierter Luft, die von dem Verdichter (2) kommt, erfolgt, um einen Strom heißer Gase zu erzeugen, und eine zweite Brennkammer (7) enthält, die stromabwärts der ersten Brennkammer (4) angeordnet ist und in der eine Verbrennung eines Gemischs aus Brennstoff und heißen Gasen, die von der ersten Brennkammer (4) kommen, erfolgt;

wobei das Verfahren **dadurch gekennzeichnet ist, dass** es in einer Anfahr-Übergangs-Betriebsphase der Gasturbinenanordnung (1) den Schritt des Steuerns des der ersten Brennkammer (4) zugeführten Brennstoffmassendurchsatzes basierend auf und entsprechend einem vorbestimmten TFLI-Plan der Flammentemperatur (TFLI) innerhalb der ersten Brennkammer (4) umfasst; wobei der TFLI-Plan angepasst wird, um die Flammentemperatur (TFLI) innerhalb der ersten Brennkammer (4) während der Anfahr-Übergangs-Betriebsphase im Wesentlichen konstant zu halten.

2. Verfahren nach Anspruch 1, **dadurch gekennzeichnet, dass** der TFLI-Plan basierend auf den Werten mehrerer Maschinenparameter (Tk1, Tk2, TAT1, TSEV1, Pk2, PEV, PSEV, etc.) der Gasturbinenanordnung (1) bestimmt wird.

3. Verfahren nach Anspruch 2, **dadurch gekennzeichnet, dass** die Gasturbinenanordnung (1) zusätzlich eine Zwischenturbine (5) umfasst, die zwischen der ersten Brennkammer (4) und der zweiten Brennkammer (7) angeordnet ist und in der eine teilweise Entspannung der heißen Gase erfolgt, die von der ersten Brennkammer (4) kommen und zur zweiten Brennkammer (7) geleitet werden.

4. Verfahren nach Anspruch 2 oder 3, **dadurch gekennzeichnet, dass** es die folgenden Schritte umfasst: Messen der mehreren Maschinenparameter (Tk1, Tk2, TAT1, Pk2, PEV, PSEV, etc.) der Gasturbinenanordnung (1); Auswählen/Bestimmen des geeigneten TFLI-Plans basierend auf den aktuellen Werten der mehreren Maschinenparameter (Tk1, Tk2, TAT1, Pk2, PEV, PSEV etc.); und Steuern des der ersten Brennkammer (4) und/oder der zweiten Brennkammer (7) zugeführten Brennstoffmassendurchsatzes basierend auf dem TFLI-Plan.

5. Verfahren nach Anspruch 3 oder 4, **dadurch gekennzeichnet, dass** der TFLI-Plan eine Folge von Soll-Werten (TAT1cmd) für die am Auslass der Zwischenturbine (5) gemessene Gastemperatur enthält; wobei die Soll-Werte (TAT1cmd) basierend auf den Ist-Werten der Maschinenparameter (Tk1, Tk2, TAT1, Pk2, PSEV, etc.) der Gasturbinenanordnung (1) und entsprechend einem mathematischen Modell berechnet werden, das die Beziehungen zwischen der Flammentemperatur (TFL1) in der ersten Brennkammer (4) und den Maschinenparametern (Tk1, Tk2, TAT1, Pk2, PEV, PSEV etc.) beschreibt.

6. Verfahren nach Anspruch 5, **dadurch gekennzeichnet, dass** es die Schritte des wiederholten Messens der Gastemperatur (TAT1) am Auslass der Zwischenturbine (5) und den Schritt des Steuerns des der ersten Brennkammer (4) und/oder der zweiten Brennkammer (7) zugeführten Brennstoffmassendurchsatzes umfasst, so dass die am Auslass der Zwischenturbine (5) gemessene Gastemperatur (TAT1) mit der Folge von Soll-Werten (TAT1cmd) übereinstimmt.

7. Verfahren nach einem der Ansprüche 3 bis 6, **dadurch gekennzeichnet, dass** die mehreren Maschinenparameter die Gastemperatur am Einlass des Verdichters (Tk1), und/oder die Gastemperatur am Auslass des Verdichters (Tk2), und/oder die Gastemperatur am Auslass der Zwischenturbine (TAT1) und/oder den Gasdruck am Auslass des Verdichters (Pk2), und/oder den Gasdruck in der ersten Brennkammer (PEV), und/oder den Gasdruck in der zweiten Brennkammer (PSEV), und/oder die Drehzahl der Maschinenwelle (9) der Gasturbinenanordnung (1) enthalten.

**Revendications**

1. Procédé destiné à commander un ensemble turbine à gaz (1) comprenant :

- un compresseur (2) dans lequel se produit une compression de l'air extérieur, afin de produire un flux d'air comprimé ;
- une chambre de combustion séquentielle comprenant une première chambre de combustion (4), dans laquelle se produit une combustion d'un mélange de combustible et d'air comprimé en provenance dudit compresseur (2), afin de produire un flux de gaz chauds, et une seconde chambre de combustion (7) qui se situe en aval de ladite première chambre de combustion (4), et dans laquelle se produit une combustion d'un mélange de combustible et de gaz chauds en provenance de ladite première chambre de combustion (4) ;
le procédé étant **caractérisé en ce qu'**il comprend, lors d'une phase de fonctionnement transitoire de démarrage de l'ensemble turbine à gaz (1), l'étape consistant à commander le débit-masse de combustible fourni à ladite première chambre de combustion (4) sur la base d'une, et selon une, planification TFL1 prédéterminée de la température de la flamme (TFL1) à l'intérieur de ladite première chambre de combustion (4) ;

ladite planification TFL1 étant adaptée pour maintenir sensiblement constante la température de la flamme (TFL1) à l'intérieur de la première chambre de combustion (4), lors de la phase de fonctionnement transitoire de démarrage.

2. Procédé selon la revendication 1, **caractérisé en ce que** ladite planification TFL1 est déterminée sur la base des valeurs d'une pluralité de paramètres moteur (Tk1, Tk2, TAT1, TSEV1, Pk2, PEV, PSEV, etc.) dudit ensemble turbine à gaz (1).

3. Procédé selon la revendication 2, **caractérisé en ce que** ledit ensemble turbine à gaz (1) comprend en outre une turbine intermédiaire (5) qui est interposée entre ladite première chambre de combustion (4) et ladite seconde chambre de combustion (7), et **en ce que** se produit une expansion partielle des gaz chauds en provenance de ladite première chambre de combustion (4) et dirigés vers ladite seconde chambre de combustion (7).

4. Procédé selon l'une quelconque des revendications 2 ou 3, **caractérisé en ce qu'**il comprend les étapes suivantes :

- mesurer ladite pluralité de paramètres moteur (Tk1, Tk2, TAT1, Pk2, PEV, PSEV, etc.) de l'ensemble turbine à gaz (1) ;
- sélectionner / déterminer la planification TFL1 appropriée sur la base des valeurs actuelles de ladite pluralité de paramètres moteur (Tk1, Tk2, TAT1, Pk2, PEV, PSEV, etc.) ; et
- commander le débit-masse de combustible fourni à ladite première (4) et / ou à ladite seconde (7) chambre de combustion, sur la base de ladite planification TFL1.

5. Procédé selon l'une quelconque des revendications 3 ou 4, **caractérisé en ce que** ladite planification TFL1 comprend une séquence de valeurs cibles (TAT1cmd) de la température des gaz mesurée à la sortie de la turbine intermédiaire (5) ;

lesdites valeurs cibles (TAT1cmd) étant calculées sur la base des valeurs actuelles desdits paramètres moteur (Tk1, Tk2, TAT1, Pk2, PEV, PSEV, etc.) dudit ensemble turbine à gaz (1), et selon un modèle mathématique qui décrit les relations entre la température de la flamme (TFL1) à l'intérieur de la première chambre de combustion (4), et lesdits paramètres moteur (Tk1, Tk2, TAT1, Pk2, PEV, PSEV, etc.).

6. Procédé selon la revendication 5, **caractérisé en ce qu'**il comprend :

- les étapes consistant à mesurer de manière répétitive la température des gaz (TAT1) à la sortie de ladite turbine intermédiaire (5) ; et
- l'étape consistant à commander le débit-masse de combustible fourni à ladite première chambre de combustion (4) et / ou à ladite seconde chambre de combustion (7), de telle sorte que la température des gaz (TAT1) mesurée à la sortie de la turbine intermédiaire (5), corresponde à ladite séquence de valeurs cibles (TAT1cmd).

7. Procédé selon l'une quelconque des revendications 3 à 6, **caractérisé en ce que** ladite pluralité de paramètres moteur comprend la température des gaz à l'entrée dudit compresseur (Tk1), et/ou la température des gaz à la sortie dudit compresseur (Tk2), et/ou la température des gaz à la sortie de ladite turbine intermédiaire (TAT1), et/ou la pression des gaz à la sortie dudit compresseur (Pk2), et/ou la pression des gaz à l'intérieur de ladite première chambre de combustion (PEV), et/ou la pression des gaz à l'intérieur de ladite seconde chambre de combustion (PSEV), et / ou la vitesse de rotation de l'arbre moteur (9) de l'ensemble turbine à gaz (1).

Fig. 1

Fig. 3

Fig. 4

Fig. 2

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0694740 A2
- US 2005188702 A